# EUROPEAN PATENT SPECIFICATION

(11) **EP 0 871 532 B1**
(45) Date of publication and mention of the grant of the patent: **15.05.2002**
(21) Application number: 96900462.1
(22) Date of filing: 03.01.1996
(51) Int. Cl.: B01D 53/02, B01D 53/04

(54) **PROCESS FOR REMOVING HEAVIER AROMATIC COMPOUNDS FROM A LIGHT HYDROCARBON GAS STREAM**
VERFAHREN ZUR ENTFERNUNG VON SCHWEREREN AROMATISCHEN VERBINDUNGEN AUS EINEM GASSTROM VON LEICHTEN KOHLENWASSERSTOFFEN
PROCEDE DESTINE A L'EXTRACTION DE COMPOSES AROMATIQUES PLUS LOURDS A PARTIR D'UN LEGER FLUX DE GAZ D'HYDROCARBURES

(30) Priority: 03.01.1995 NO 950013
(43) Date of publication of application: 21.10.1998
(73) Proprietor: Den Norske Stats Oljeselskap A.S., 4035 Stavanger (NO)
(72) Inventor: SOLBAKKEN, Age, Deceased (NO); ERI, Sigrid, N-7036 Trondheim (NO)
(74) Representative: Rees, David Christopher
(86) International application number: NO9600001
(87) International publication number: WO9620774

(56) References cited:
- GB-A- 1 133 184

## Description

The present invention relates to a process for removing heavier aromatic compounds such as trimethylphenylindane (TMPI) and phthalate compounds from a light hydrocarbon gas stream, especially from a stream of natural gas.

Steel pipelines are utilized for transportation of natural gas over large distances, e.g. from an offshore production location to a land terminal. Such pipelines often have an inner coating, i.a. to reduce friction. Such inner coating may be constituted by an epoxy coating. A high pressure is used in a pipeline for natural gas and under such conditions components of the epoxy coating may be dissolved in the natural gas by supercritical extraction and may contaminate the natural gas. The contaminants may be various aromatic compounds such as 1,1,3-trimethyl-3-phenyl-indane (TMPI). When the pressure in the pipeline is reduced for transportation of the natural gas to individual consumers, the aromatic contaminants deposit as a fine powder on valves, filters, turbine meters, etc.

Attempts have been made to solve the problems connected with this type of contamination of the transported natural gas by a controlled deposition of the contaminants in a cold trap, or by treating the gas in a scrubber. However, such methods have not satisfactorily solved the problems. Purification in a cold trap and purification by scrubbing both require cooling of the natural gas down to low temperatures, e.g. down to about -10 °C in a cold trap, and down to between -30 °C and -40 °C in a scrubbing operation. Transportation of natural gas often involve very large amounts of gas and cooling of such large amounts of gas down to said low temperatures requires a high amount of energy and consequently involves high operational costs. Purification of natural gas by scrubbing also involves very high capital costs.

Trimethylphenylindane (TMPI), which under certain conditions may exude from the epoxy coating of an epoxy-lined gas pipeline and be transferred to the gas contained therein, is a relatively large molecule, having a minimum diameter of 9 A. Due to the large molecular size, adsorption by materials such as zeolites, which have pores smaller than or of the same order of magnitude as the molecular size, is not much useful. Satisfactory results have also not been obtained with alumina, because its oxide surface does not to a sufficient extent adsorb aromatic compounds chemically. It has now been shown, however, that aromatic compounds such as TMPI, which are dissolved in the natural gas, can be removed effectively and at acceptable coats by means of an adsorption process wherein specific types of activated carbons are used as an adsorbent. Even phthalate compounds, such as butyl phthalate and dioctyl phthalate, which are utilized as plasticizers in paints and coatings and can be transferred to the natural gas in amounts of a few nanograms pr. liter of gas, are capable of being removed from the natural gas by this method. Such phthalate compounds are suspected to have an undesired hormonal effect and it is therefore desirable to remove such compounds from the natural gas before storing it or delivering it to the consumers.

GB-A-1133184 describes a process for removing contaminants from natural gass using activated carbon as a sorbent. The particulate carbon has a defined size, but not a defined pore distribution.

Thus, the invention provides a process for removing heavier aromatic compounds, especially trimethylphenylindane (TMPI) and phthalate compounds, from a light hydrocarbon gas stream, especially a stream of natural gas, which process is characterized in that said hydrocarbon gas stream is contacted with an activated carbon having a pore size distribution where at least 10% of the pores have a diameter above 17 A.

Preferably, there is used in the process of the invention an activated carbon having a pore size distribution where at least 15% of the pores have a diameter above 17 A.

The process of the invention is suitably carried out at the temperatures and pressures commonly used in transportation of natural gas, e.g. at temperatures in the range of from -5 °C to +20 °C and at pressures in the range of from 40 to 120 bar.

The effect achieved by purifying natural gas by adsorption of the above-mentioned contaminants on activated carbon according to the process of the invention has proved to be better than the effect achieved by purifying of the natural gas in a cold trap or by scrubbing. In addition, the operational costs involved in the process of the invention will be low and the capital costs moderate. The advantages achieved in respect of good purification efficiency, moderate capital costs and low operational costs by adsorption on activated carbon in accordance with the invention make this purification method a very advantageous method compared to the previous methods based on purification in a cold trap or by scrubbing.

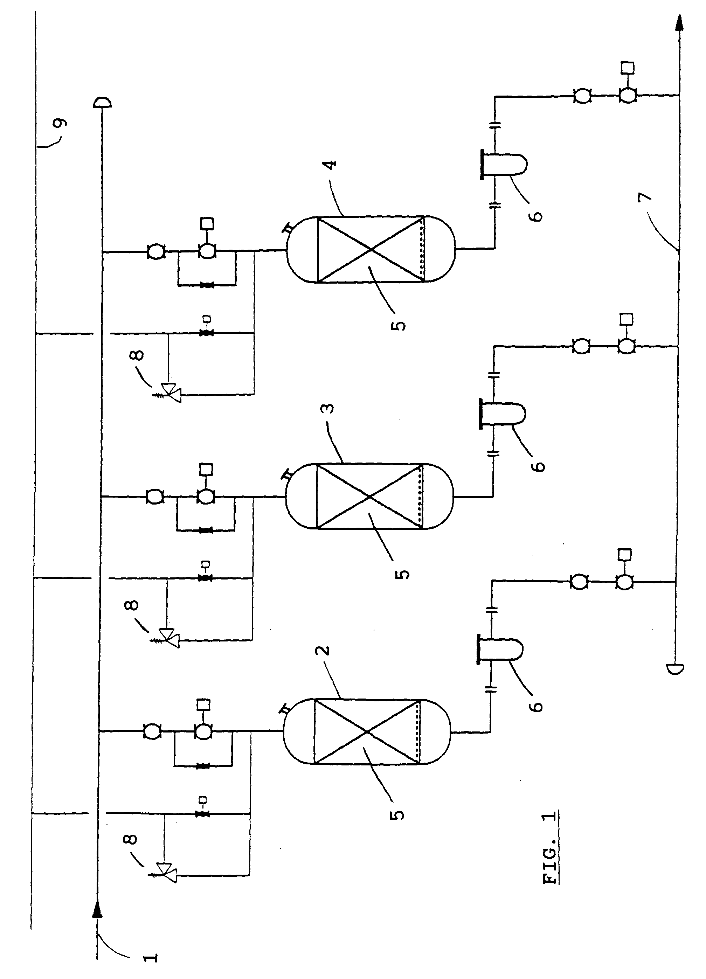

An embodiment of the process of the invention will be described in more detail below, with reference to Fig. 1, which is a schematic flow diagram for an adsorption plant with three adsorbers.

In the flow diagram shown in Fig. 1, a natural gas (37 Mill. Nm³/d) contaminated with heavy aromatic components, especially TMPI, is introduced at 1 in an amount of 50 µg/Nm³. The natural gas is distributed to three adsorbers 2, 3 and 4, each having an inner diameter of about 3.0 m and a total height of about 7.0 m. Each adsorber 2, 3, 4 contains a bed 5 of activated carbon ("WS4" from Chemviron Carbon; see specifications below) up to a height of 5.5 m (36.5 m³ = 15.3 tons). The natural gas is passed through the bed of activated carbon with a flow rate of 0.35 m/s, corresponding to a contact time of 15.7 seconds, and with a pressure drop through the bed of 2.0 bar. From each of the adsorbers 2, 3, 4 the treated natural gas is passed through a filter cartridge 6 arranged immediately downstream of each adsorber, in which adsorbers carbon powder formed in the bed of activated carbon during charging and operation is removed by filtering. The roughly filtered output streams are then combined in a collecting pipe 7 and passed to a filter separator (not shown), in which the gas is filtered according to usual practice in the art. The simplified flow diagram also shows some of the valves, i.a. security valves 8 and ventilation via a pipe 9 to a flare tower.

By operation of the plant under the above given conditions, the content of TMPI and other heavier aromatic compounds in the natural gas will be reduced to less than 1 µg/Nm³, which is lower than the detection limit of the utilized analysis method (methanol extraction + GC-MS), and is considered a surprisingly good result.

The service life of the activated carbon in the adsorbers will normally be 250 to 300 days. After this time the activated carbon will either be regenerated according to methods which are conventional per se, or be used as a fuel.

In order to compare the capacities of activated carbons and aluminas for adsorbing TMPI the following tests were carried out: 100 mg of TMPI were solved in 100 ml of cyclohexane. 5 g of adsorbent were then added to the solution and the mixture was agitated continuously. Samples were taken at regular intervals and the amount of residual TMPI was determined by GC-MS. Three types of adsorbent were used, viz. γ-alumina from Akzo Nobel Chemicals, and two types of activated carbon, "WS4" and "BPL", from Chemviron Carbon. The three adsorbents had the following characteristics:

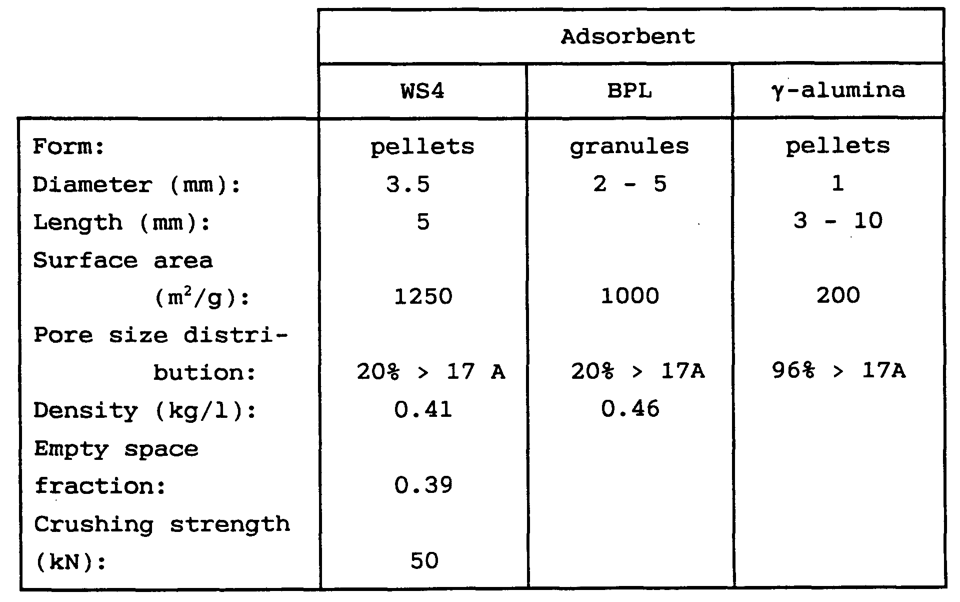

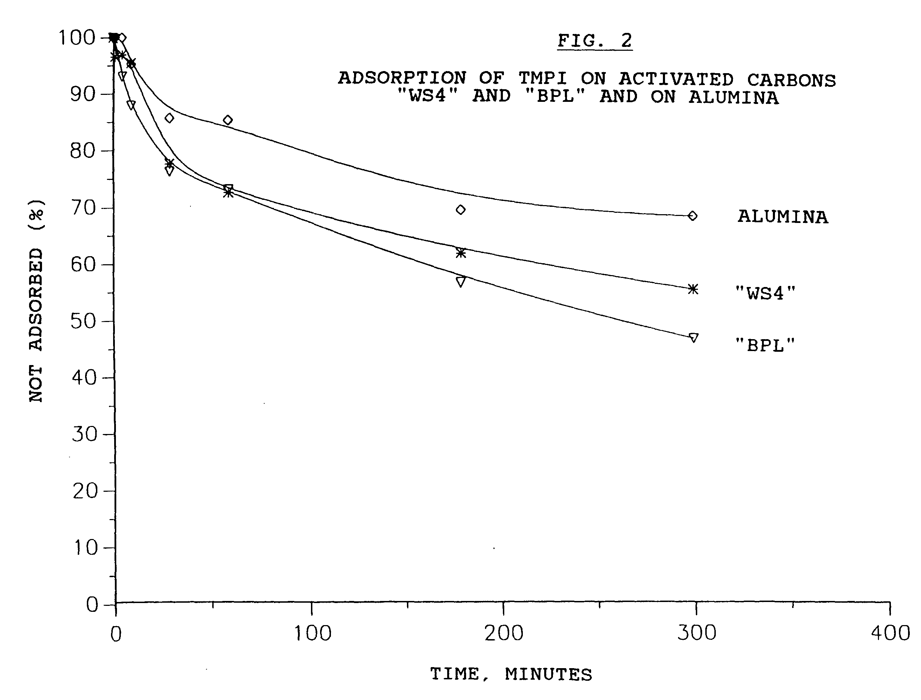

The pore size distribution was measured in an analysis instrument of the type Carlo Erba Sorptomatic 1900. The results are shown in Fig. 2, which gives the amount of non-adsorbed TMPI in % as a function of the time. It is seen from the figure that after 5 hours 45-55% of the added TMPI has been adsorbed on the two types of activated carbon, whereas only about 30% has been adsorbed on the alumina.

Activated carbon was tested as an adsorbent for removal of trimethylphenylindane (TMPI) from a natural gas in a pilot plant. The pilot plant comprised an adsorption column of length 5 m and inner diameter 25.4 mm, which column was filled to a height of about 0.5 m with 89.6 g of activated carbon of the type "WS4" from Chemviron Carbon, having the above-indicated characteristics.

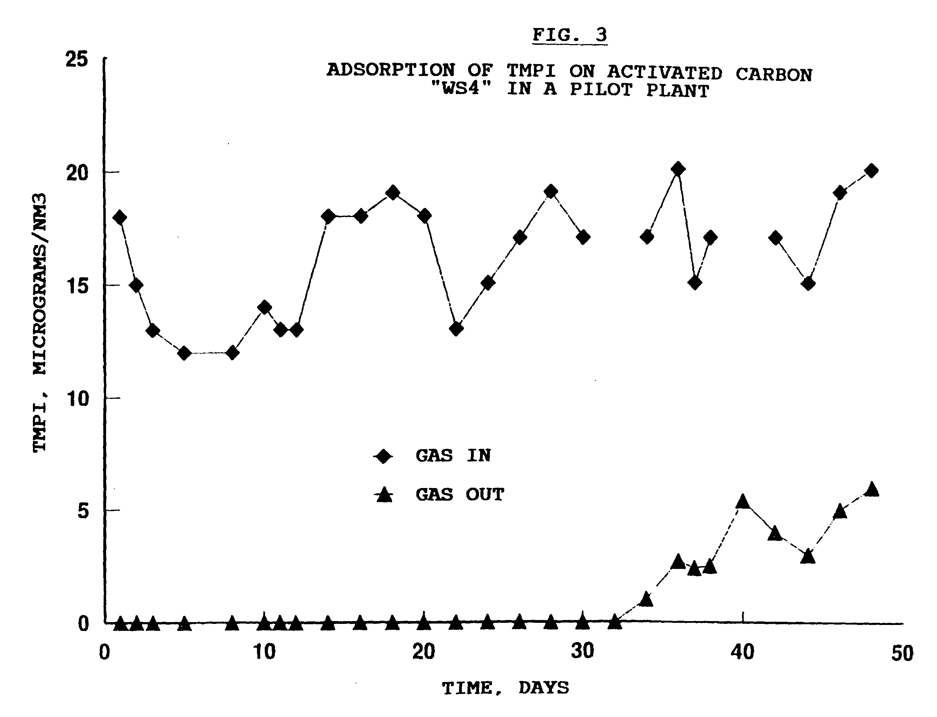

In a first test a natural gas containing about 18 µg of TMPI/Nm³ was introduced into the adsorption column at a pressure of 90-100 bar and at a temperature of about 10 °C, in an amount varying between 0.9 and 1.14 Nm³/min, corresponding to a flow rate of between 0.34 and 0.42 m/s, and a retention time in the adsorbent bed of between 1.2 and 1.7 seconds. The results are given in Fig. 3, which shows the inlet concentration and the outlet concentration of TMPI as a function of the time. Until the breakthrough of TMPI came after about 30 days, the concentration of TMPI at the outlet of the adsorption column was always lower than the detection limit (1 µg/Nm³). The calculated amount of adsorbed TMPI on the adsorbent at the breakthrough was 1.2% by weight.

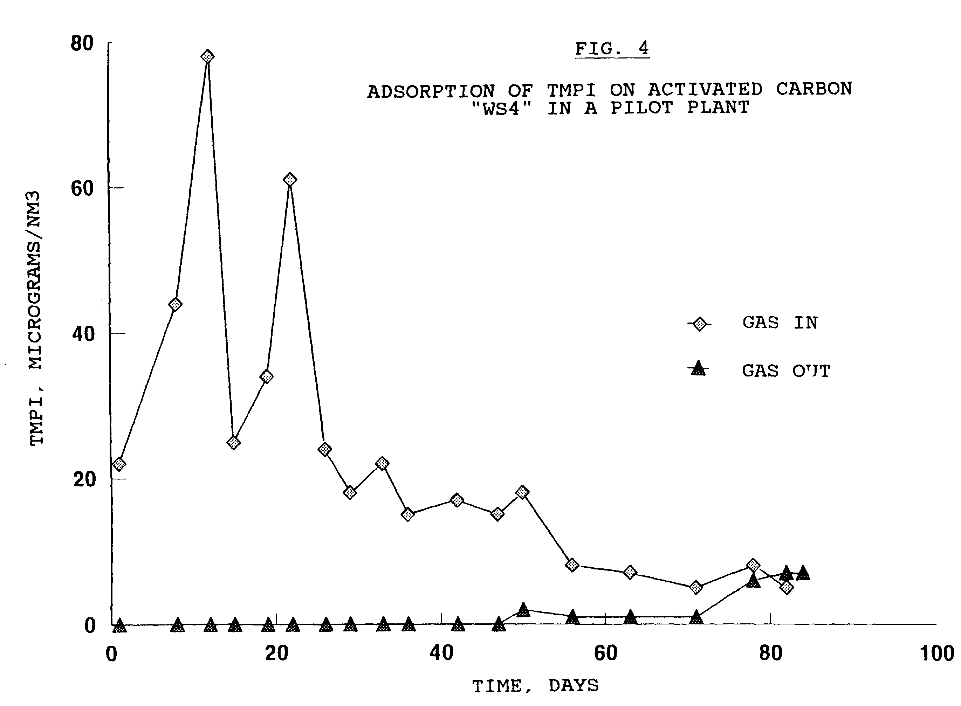

A similar second test was carried out in the same pilot plant, using the same type of adsorbent and the same natural gas having the same content of TMPI. In this case, however the adsorption column was filled with 179.2 g of adsorbent, corresponding to a height of about 1 m. In this test the operational conditions in the line delivering the natural gas were unstable. This resulted i.a. in a variation of the concentration of TMPI from below 10 µg/Nm³ up to as much as 80 µg/Nm³. The natural gas was introduced into the column at a pressure of between 80 and 105 bar in an amount varying between 0.82 and 1.14 Nm³/min, corresponding to a gas speed of between 0.34 and 0.53 m/s and a retention time in the adsorbent bed of between 1.9 and 3.0 seconds. Fig. 4 shows the results obtained in the test. In spite of the larger fluctuations in the inlet concentration of TMPI, the content of TMPI in the outlet gas from the adsorption column remained lower than the detection limit of 1 µg/Nm³ even in this case. The breakthrough of TMPI came after about 60 days. Even in this case the amount of adsorbed TMPI on the adsorbent at breakthrough was calculated to be 1.2% by weight. The test shows that the results obtained in the first test are reproducible and that the adsorbent can tolerate fluctuations in the concentration of TMPI as well as high concentrations of TMPI.

Before a natural gas is delivered to the final consumers, odorous agents are often added thereto in order to enable the consumers to detect any gas leakages. As odorous agents, various sulphur compounds, e.g. thiophenes, are used. If the content of contaminating heavier aromatic compounds (e.g. TMPI) are removed from the natural gas after such odorous agents having been added, it is important that the odorous agents should not be removed together with the aromatic compounds. Also, it is desirable that the adsorption capacity for the aromatic contaminants should not be reduced to any noticeable extent. In order to find out to which extent the process of the invention fulfils these requirements, the following test was carried out:

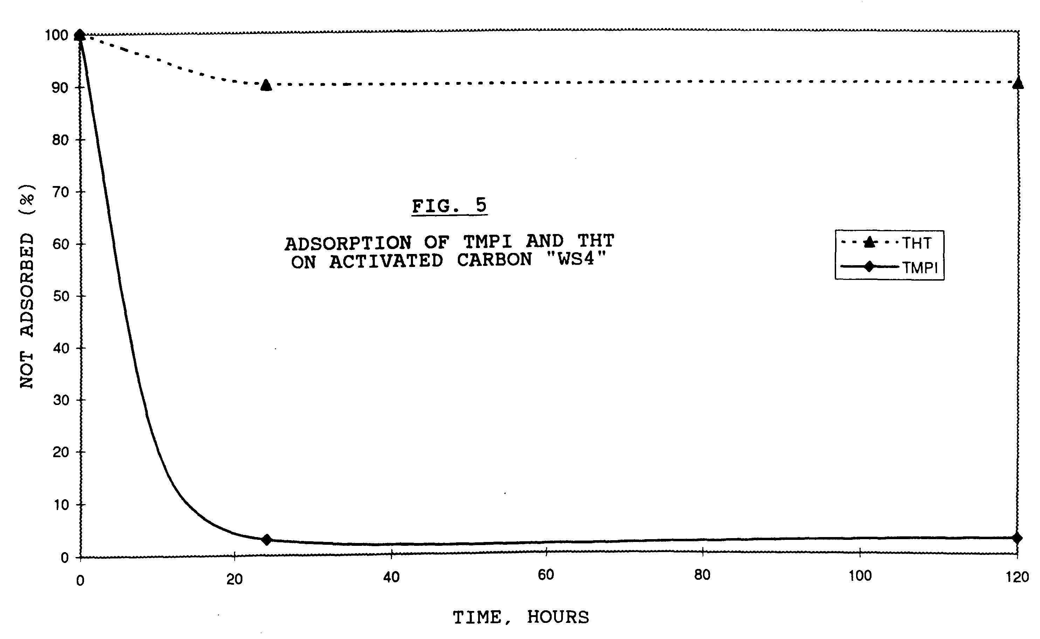

100 mg of TMPI and 1 g of tetrahydrothiophene (THT) were dissolved in 100 ml of methanol. 10 g of adsorbent consisting of an activated carbon of the type "WS4" from Chemviron Carbon were then added to the solution and the mixture was agitated continuously. Samples were taken after 24 hours and 120 hours and the amounts of remaining TMPI and THT in the solution were determined by GC-MS. The results are shown in Fig. 5. The results show that the remaining amounts of TMPI and THT in the solution after adsorption on the activated carbon were about 3% and about 90%, respectively. This shows that TMPI is adsorbed almost completely by the process of the invention, even in the presence of a large excess of THT, and that TMPI thus outperforms THT in respect of being adsorbed in the present process.

## Claims

1. A process for removing heavier aromatic compounds, from a stream of natural gas, whereby said natural gas stream is contacted with an activated carbon having a pore size distribution where at least 10% of the pores have a diameter above 17 A.

2. A process according to Claim 1, **characterised by** there being used an activated carbon having a pore size distribution where at least 15% of the pores have a diameter above 17 A.

3. A process according to Claim 1 or Claim 2, **characterised in that** the hydrocarbon gas stream is passed over the activated carbon in one or more adsorbers connected in parallel, in which adsorbers the activated carbon is arranged in a fixed bed.

4. A process according to any of Claims 1 to 3, **characterised in that** it is carried out in the presence of additioned odorous agents selected from sulphur compounds.

5. A process according to Claim 4, **characterised in that** the additional odorous agents are thiophenes

6. A process according to Claim 4 or Claim 5, **characterised in that** it is carried out in the presence of tetrahydrothiophene (THT).

7. A process according to any of Claims 1 to 6, **characterised in that** the heavier aromatic compounds are trimethylphenylindane (TMPI) and phthalate compounds.

## Patentansprüche

1. Verfahren zur Entfernung von schwereren aromatichen Zusammensetzungen ans einem Strom eines natürlichen Gases, wobei der natürliche Gasstrom in Kontakt mit einer Aktivkohle gebracht wird, die eine Porengrößenverteilung hat, bei der zumindest 10 % der Poren einen Durchmesser von über 17 A haben.

2. Verfahren nach Anspruch 1, **dadurch gekennzeichnet, daß** eine Aktivkohle mit einer Porengrößenverteilung verwendet wird, bei der zumindest 15 % der Poren einen Durchmesser von über 17 A haben.

3. Verfabren nach Anspruch 1 oder 2, **dadurch gekennzeichnet, daß** der Kohlenwasserstoffgasstrom in einem oder mehreren parallel miteinander verbunden Absorbern über die Aktivkohle geführt wird, wobei in den Absorbern die Aktivkohle in einem festen Bett angeordnet ist.

4. Verfahren nach einem der Ansprüche 1 bis 3, **dadurch gekennzeichnet, daß** es in der Anwesenheit von riechstoffbildenden Mitteln durchgeführt wird, ausgewählt aus Schwefelzusammensetzungen.

5. Verfahren nach Anspruch 4, **dadurch gekennzeichnet, daß** die zusätzlichen riechstoffbildenden Mittel Thiophene sind.

6. Verfahren nach Anspruch 4 oder 5, **dadurch gekennzeichnet, daß** es in Anwesenheit von Tetrahydrothiophen (THT) durchgeführt wird.

7. Verfahren nach einem der Ansprüche 1 bis 6, **dadurch gekennzeichnet, daß** die schwereren aromatischen Zusammensetzungen Trimethylphenylindane (TMPI) und Phthalat-Zusammensetzungen sind.

## Revendications

1. Procédé d'extraction de composés aromatiques plus lourds, à partir d'un flux de gaz naturel, par lequel ledit flux de gaz naturel est mis en contact avec du carbone activé ayant une distribution de la taille des pores où au moins 10% des pores ont un diamètre supérieur à 17 A.

2. Procédé selon la revendication 1, **caractérisé en ce qu'**on utilise un carbone activé ayant une distribution de la taille des pores où au moins 15% des pores ont un diamètre supérieur à 17 A.

3. Procédé selon la revendication 1 ou la revendication 2, **caractérisé en ce que** le flux de gaz d'hydrocarbures est passé sur du carbone activé dans un ou plusieurs adsorbeurs connectés en parallèle, adsorbeurs dans lesquels le carbone activé est disposé dans un lit fixe.

4. Procédé selon l'une quelconque des revendications 1 à 3, **caractérisé en ce qu'**il est effectué en présence d'agents odorants ajoutés choisis parmi les composés du soufre.

5. Procédé selon la revendication 4, **caractérisé en ce que** les agents odorants supplémentaires sont des thiophènes.

6. Procédé selon la revendication 4 ou la revendication 5, **caractérisé en ce qu'**il est effectué en présence de tétrahydrothiophène (THT).

7. Procédé selon l'une quelconque des revendications 1 à 6, **caractérisé en ce que** les composés aromatiques plus lourds sont le triméthylphénylindane (TMPI) et des composés de phtalate.
